(19) **Europäisches Patentamt European Patent Office Office européen des brevets**

(11) **EP 3 753 752 B1**

(12) **EUROPEAN PATENT SPECIFICATION**

(45) Date of publication and mention of the grant of the patent:
**04.10.2023 Bulletin 2023/40**

(21) Application number: **19754115.4**

(22) Date of filing: **12.02.2019**

(51) International Patent Classification (IPC):
*B60C 11/00* (2006.01)     *B60C 13/00* (2006.01)
*B60C 15/06* (2006.01)     *B60C 11/03* (2006.01)
*B60C 11/12* (2006.01)     *B60C 3/04* (2006.01)

(52) Cooperative Patent Classification (CPC):
**B60C 11/0306; B60C 3/04; B60C 9/2009;**
**B60C 11/005; B60C 11/0083; B60C 11/0304;**
**B60C 11/0332; B60C 11/1272;** B60C 2009/2016;
B60C 2011/0016; B60C 2011/0025;
B60C 2011/0339; B60C 2011/0381;
B60C 2011/1213; B60C 2011/1254;     (Cont.)

(86) International application number:
**PCT/JP2019/004850**

(87) International publication number:
**WO 2019/159892 (22.08.2019 Gazette 2019/34)**

(54) **PNEUMATIC TIRE**

LUFTREIFEN

PNEU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.02.2018 JP 2018024354**

(43) Date of publication of application:
**23.12.2020 Bulletin 2020/52**

(73) Proprietor: **The Yokohama Rubber Co., Ltd. Tokyo 105-8685 (JP)**

(72) Inventor: **CHAYA, Hitomi Hiratsuka-shi, Kanagawa 254-8601 (JP)**

(74) Representative: **Dilg, Haeusler, Schindelmann Patentanwaltsgesellschaft mbH Leonrodstraße 58 80636 München (DE)**

(56) References cited:
WO-A1-2012/066840     WO-A1-2015/059942
JP-A- H05 201 210     JP-A- H08 230 416
JP-A- H10 119 514     JP-A- 2003 165 311
JP-A- 2012 176 694     JP-A- 2013 095 233
JP-A- 2014 108 653

(52) Cooperative Patent Classification (CPC): (Cont.)
B60C 2011/129; B60C 2013/007; B60C 2015/009;
B60C 2015/061; Y02T 10/86

**Description**

Technical Field

The present invention relates to a pneumatic tire suitable for use on icy and snowy roads and particularly relates to a pneumatic tire capable of improving braking performance on ice and reducing rolling resistance.

Background Art

In general, in a pneumatic tire for use on icy and snowy roads, which is exemplified by a studless tire, a plurality of longitudinal grooves extending in a tire circumferential direction and a plurality of lateral grooves extending in a tire lateral direction are formed in a tread portion, and a number of blocks are defined by those longitudinal grooves and lateral grooves. Further, a plurality of sipes are formed in each of the blocks.

The pneumatic tire as described above can exert excellent driving performance on ice and snow with the grooves and the sipes formed in the tread portion. In recent years, it has been further demanded to improve braking performance on ice.

Further, the pneumatic tire for use on icy and snowy roads adopts a multilayer structure including a cap tread rubber layer and an undertread rubber layer for the tread portion. In this case, the flexible cap tread rubber layer exerts followability with respect to a road surface, and at the same time, the undertread rubber layer functioning as a foundation contributes to improvement in steering stability (for example, see Patent Documents 1 and 2).

However, in general, a rubber composition forming the undertread rubber layer has high $\tan \delta$. Thus, when the undertread rubber layer is increased in thickness, rolling resistance is likely to be degraded. In view of this, even though rolling resistance is regarded as a minor problem for the pneumatic tire for use on icy and snowy roads in the related art, it has been demanded to reduce rolling resistance in recent years.

Citation List

Patent Literature

Patent Document 1: JP 2009-262646 A
Patent Document 2: JP 2017-140936 A

JP 2014 108653 A discloses a pneumatic tire comprising a tread portion, a pair of sidewall portions disposed on both sides of the tread portion and a pair of bead portions with a bead core and a bead filler 12, which are disposed inward of the pair of sidewall portions in a radial direction of the tire, wherein between the bead portions there is a carcass layer. The tread portion is a multilayer structure including a cap tread rubber layer and an under tread rubber layer, wherein in the tread layer sipes and groves are formed. The sipes and groves are so arranged, that the tire has a snow track index STI between 160 and 240.

WO 2015/059942 A1 discloses a pneumatic tire comprising a tread portion, a pair of sidewall portions disposed on both sides of the tread portion and a pair of bead portions, which are disposed inward of the pair of sidewall portions in a radial direction of the tire, wherein between the bead portions there is a carcass layer. The tread portion is a multilayer structure including a cap tread rubber layer and an under tread rubber layer, wherein in the tread layer sipes and groves are formed. The sipes and groves are so arranged, that the tire has a snow track index STI between 180 and 220.

JP 2003 165 311 A discloses a pneumatic tire with a particular ratio between the ground contact width and the cross-sectional width of the tire between 0.8 and 0.9.

Summary of Invention

Technical Problem

An object of the present invention is to provide a pneumatic tire capable of improving braking performance on ice and reducing rolling resistance.

Solution to Problem

In order to achieve the above-mentioned object, there is the provision of a pneumatic tire according to claim 1.

Advantageous Effects of Invention

In the present invention, a flat tread profile is adopted, and the ground contact width of the tread portion is increased. With this, a ground contact area of the tread portion can be increased, and braking performance on ice can be improved. Moreover, the height of the bead filler is reduced. With this, a vertical spring constant of the tire is reduced, and the side wall portion is likely to be deflected. Thus, an energy loss in the tread portion can be relatively reduced, and rolling resistance can be reduced. Further, when deflection of the side wall portion is promoted, a ground contact area at the time of braking is increased. Thus, this also contributes to improvement in braking performance on ice. With this, braking performance on ice can be improved, and rolling resistance can be reduced.

In the present invention, a tire maximum width position preferably falls within a range of from 50% to 60% of the tire cross-sectional height. When the tire maximum width position is set within the range, a vertical spring constant of the tire is reduced, and the side wall portion is likely to be deflected. Thus, an energy loss in the tread portion can be relatively reduced, and rolling resistance can be reduced. Further, deflection of the sidewall portion increases a ground contact area.

A rubber thickness at the tire maximum width position on an outer side of the carcass layer preferably falls within a range of from 1 mm to 4 mm. When the rubber thickness at the tire maximum width position on the outer side of the carcass layer is reduced, a vertical spring constant of the tire is reduced, and a ground contact area is increased. Further, an energy loss in the side wall portion can be reduced, and rolling resistance can be reduced.

The carcass layer is preferably turned up around the bead core from an inner side to an outer side of the tire, and a turned-up height of the carcass layer falls within a range of from 10% to 40% of the tire cross-sectional height. When the turned-up height of the carcass layer is reduced as described above, a vertical spring constant of the tire can be reduced, a ground contact area can be increased, and rolling resistance can be reduced.

In the present invention, in order to satisfy required characteristics as a pneumatic tire for use on icy and snowy roads, a snow traction index STI is set to 180 or more. The snow traction index STI is calculated with Expression (1) given below.

$$STI = -6.8 + 2202\ \rho g + 672\ \rho s + 7.6\ Dg \cdot \qquad \cdots (1)$$

Where

pg: groove density (mm/mm$^2$) = a total length of extending components of the grooves in the tire lateral direction (mm)/a total area of a ground contact region (mm$^2$),
ps: sipe density (mm/mm$^2$) = a total length of extending components of the sipes in the tire lateral direction (mm)/a total area of a ground contact region (mm$^2$), and
Dg: Average groove depth (mm).

In the present invention, the dimensions such as the tread radius, the tire outer diameter, and the tire cross-sectional height are measured under a state in which the tire is mounted on a regular rim and inflated to a regular internal pressure. Further, the tire ground contact width of the tread portion is the ground contact width in the tire axial direction measured under a state in which the tire is mounted on a regular rim and inflated to a regular internal pressure and when placed vertically upon a flat surface with a regular load applied thereto. "Regular rim" is a rim defined by a standard for each tire according to a system of standards that includes standards on which tires are based and refers to a "standard rim" in the case of JATMA, refers to a "design rim" in the case of TRA, and refers to a "measuring rim" in the case of ETRTO. "Regular internal pressure" is air pressure defined by a standard for each tire according to a system of standards that includes standards on which tires are based and refers to "maximum air pressure" in the case of JATMA, refers to the maximum value in the table of "TIRE ROAD LIMITS AT VARIOUS COLD INFLATION PRESSURES" in the case of TRA, and refers to "INFLATION PRESSURE" in the case of ETRTO. However, "regular internal pressure" is 180 kPa in a case where a tire is a tire for a passenger vehicle. "Regular load" is a load defined by a standard for each tire according to a system of standards that includes standards on which the tires are based and refers to "maximum load capacity" in the case of JATMA, refers to the maximum value in the table of "TIRE ROAD LIMITS AT VARIOUS COLD INFLATION PRESSURES" in the case of TRA, and refers to "LOAD CAPACITY" in the case of ETRTO. When the tire is for use with a passenger vehicle, a load corresponding to 88% of the load described above is used.

Brief Description of Drawings

FIG. 1    is a meridian cross-sectional view illustrating a pneumatic tire according to an embodiment of the present invention.

FIG. 2    is a developed view illustrating a tread pattern of the pneumatic tire in FIG. 1.

Description of Embodiments

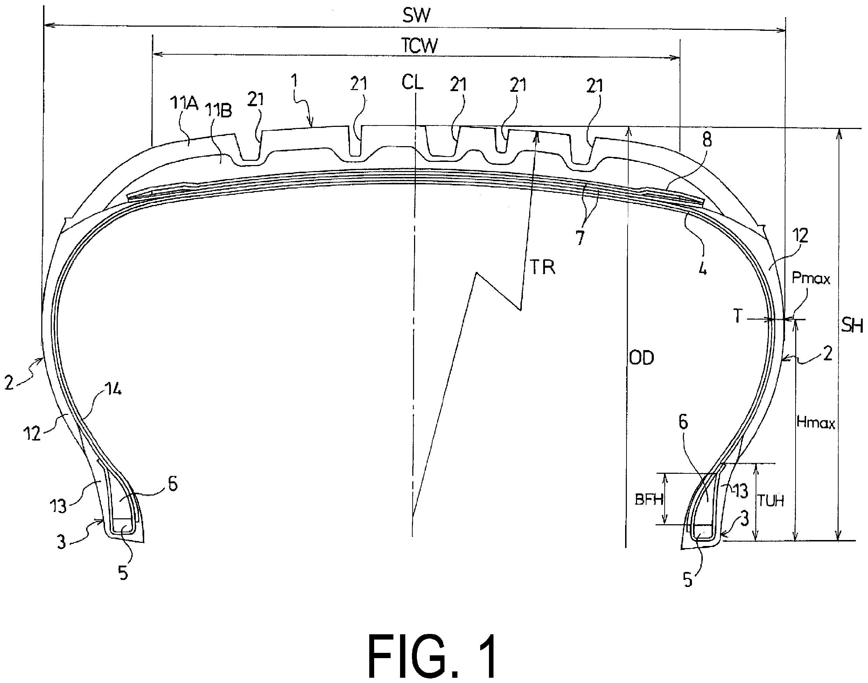

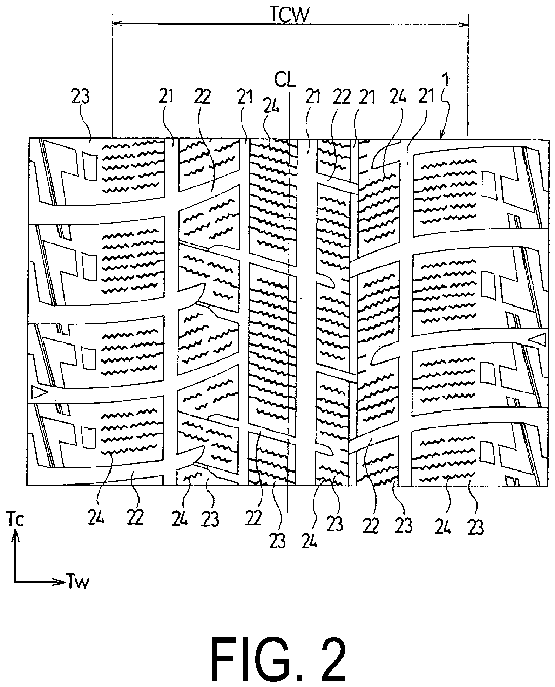

Configurations of embodiments of the present invention will be described in detail below with reference to the accompanying drawings. FIG. 1 and FIG. 2 illustrate a pneumatic tire according to an embodiment of the present invention. In FIG. 1 and FIG. 2, Tc indicates a tire circumferential direction, Tw indicates a tire lateral direction, CL indicates a tire equator, and TCW indicates a ground contact width.

As illustrated in FIG. 1, a pneumatic tire of the present embodiment includes a tread portion 1 having an annular shape and extending in the tire circumferential direction, a pair of sidewall portions 2, 2 disposed on both sides of the tread portion 1, and a pair of bead portions 3, 3 disposed inward of the sidewall portions 2 in the tire radial direction.

A carcass layer 4 is mounted between the pair of bead portions 3, 3. The carcass layer 4 includes a plurality of reinforcing cords extending in the tire radial direction and is folded back around bead cores 5 disposed in each of the bead portions 3 from a tire inner side to a tire outer side. A bead filler 6 having a triangular cross-sectional shape formed from rubber composition is disposed on the outer circumference of the bead core 5.

A plurality of belt layers 7 are embedded on the outer circumferential side of the carcass layer 4 in the tread portion 1. The belt layers 7 each include a plurality of reinforcing cords that are inclined with respect to the tire circumferential direction, the reinforcing cords being disposed between layers in a criss-cross manner. In the belt layers 7, the inclination angle of the reinforcing cords with respect to the tire circumferential direction falls within a range of from 10° to 40°, for example. Steel cords are preferably used as the reinforcing cords of the belt layers 7. To improve high-speed durability, at least one belt cover layer 8, formed by arranging reinforcing cords at an angle of, for example, not greater than 5° with respect to the tire circumferential direction, is disposed on an outer circumferential side of the belt layers 7. Nylon, aramid, or similar organic fiber cords are preferably used as the reinforcing cords of the belt cover layer 8.

In the pneumatic tire, a cap tread rubber layer 11A and an undertread rubber layer 11B are disposed on an outer side of the carcass layer 4, the belt layers 7, and the belt cover layer 8 in the tread portion 1. The cap tread rubber layer 11A is positioned outward of the undertread rubber layer 11B in the tire radial direction and is exposed to a tire outer surface. The undertread rubber layer 11B is formed of a rubber composition having hardness higher than a rubber composition forming the cap tread rubber layer 11A. More specifically, the rubber composition forming the cap tread rubber layer 11A has JIS hardness falling within a range of from 50 to 65, and the rubber composition forming the undertread rubber layer 11B has JIS hardness falling within a range of from 56 to 66. The JIS hardness is the durometer hardness measured in accordance with JIS K-6253 using a type A durometer and under a temperature of 20°C.

Further, a side rubber layer 12 is disposed on an outer side of the carcass layer 4 in the sidewall portion 2. A rim cushion rubber layer 13 is disposed on the outer side of the carcass layer 4 in the bead portion 3. Further, on a tire inner surface, an innerliner layer 14 is disposed along the carcass layer 4.

As illustrated in FIG. 2, a plurality of longitudinal grooves 21 extending in the tire circumferential direction Tc and a plurality of lateral grooves 22 extending in the tire lateral direction Tw are formed in the tread portion 1. A plurality of land portions 23 each having a block shape are defined by those longitudinal grooves 21 and lateral grooves 22 in the tread portion 1. Further, in each of the land portions 23, a plurality of sipes 24 extending in the tire lateral direction are formed. The sipe may extend in a zigzag shape or may extend linearly along the tire lateral direction. The sipe 24 has a groove width of approximately 1.5 mm or less. Note that the tread pattern is not particularly limited. In order to satisfy required characteristics as a pneumatic tire for use on icy and snowy roads, a snow traction index STI is set to 180 or more, more preferably, falls within a range of from 180 to 240.

In the pneumatic tire, as illustrated in FIG. 1, a tread radius TR in the meridian cross-section of the tread portion 1 is set to fall within a range of from 80% to 140% of a tire outer diameter OD, the ground contact width TCW of the tread portion 1 is set to fall within a range of from 70% to 75% of a tire cross-sectional width SW, and a height BFH of the bead filler 6 disposed on an outer circumference of the bead core 5 of the bead portion 3 is set to fall within a range of 40% or less of a tire cross-sectional height SH.

In the pneumatic tire described above, a flat tread profile defined by the tread radius TR is adopted, and the ground contact width TCW of the tread portion 1 is increased. With this, a ground contact area of the tread portion 1 can be increased, and braking performance on ice can be improved. Moreover, the height BFH of the bead filler 6 is reduced. With this, a vertical spring constant of the tire is reduced, and the side wall portion 2 is likely to be deflected. Thus, an energy loss in the tread portion 1 can be relatively reduced, and rolling resistance can be reduced. Further, when the deflection of the side wall portion 2 is promoted, a ground contact area at the time of braking is increased. Thus, this also contributes to improvement in braking performance on ice. With this, braking performance on ice can be improved, and rolling resistance can be reduced.

Here, when the tread radius TR in the meridian cross-section of the tread portion 1 is less than 80% of the tire outer diameter OD, a ground contact area is insufficient. In contrast, when the tread radius TR is more than 140%, contact with the ground in a center region is degraded. Thus, an effect of improving braking performance on ice is lowered. Particularly, the tread radius TR preferably falls within a range of from 110% to 130% of the tire outer diameter OD.

Further, when the ground contact width TCW of the tread portion 1 is less than 66% of the tire cross-sectional width SW, a ground contact area is insufficient. In contrast, when the ground contact width TCW is more than 83%, contact with the ground is improved in shoulder regions but degraded in the center region. Thus, an effect of improving braking performance on ice is lowered. Particularly, the ground contact width TCW of the tread portion 1 falls within a range of from 70% to 75% of the tire cross-sectional width SW.

Further, when the height BFH of the bead filler 6 is more than 40% of the tire cross-sectional height SH, an effect of reducing rolling resistance cannot be obtained. Particularly, the height BFH of the bead filler 6 preferably falls within a range of from 10% to 20% of the tire cross-sectional height SH. Note that the height BFH of the bead filler 6 may be 0% of the tire cross-sectional height SH (that is, a structure without the bead filler 6).

In the pneumatic tire, a height Hmax from a bead heel position to a tire maximum width position Pmax in the tire radial direction preferably falls within a range of from 50% to 60% of the tire cross-sectional height SH. When the tire maximum width position Pmax is disposed within the range, a vertical spring constant of the tire is reduced, and the side wall portion 2 is likely to be deflected. Thus, an energy loss in the tread portion 1 can be relatively reduced, and rolling resistance can be reduced. Further, when the side wall portion 2 is deflected, a ground contact area can be increased. Here, when the tire maximum width position Pmax is positioned inward of a position corresponding to 50% of the tire cross-sectional height SH in the tire radial direction, an effect of reducing a vertical spring constant is lowered. In contrast, when the tire maximum width position Pmax is positioned outward of a position corresponding to 60% of the tire cross-sectional height SH in the tire radial direction, which is not suitable for the tire structure, durability is degraded. Particularly, the height Hmax from the bead heal position to the tire maximum width position Pmax in the tire radial direction preferably falls within a range of from 52% to 56% of the tire cross-sectional height SH.

In the pneumatic tire, a rubber thickness T at the tire maximum width position Pmax on an outer side of the carcass layer 4 preferably falls within a range of from 1 mm to 4 mm. When the rubber thickness T at the tire maximum width position Pmax on the outer side of the carcass layer 4 is reduced, a vertical spring constant of the tire is reduced, and a ground contact area is increased. Further, an energy loss in the side wall portion 2 can be reduced, and rolling resistance can be reduced. Here, when the rubber thickness T is less than 1 mm, cut resistance is degraded. In contrast, when the rubber thickness T is more than 4 mm, an energy loss in the side wall portion 2 is increased. Particularly, the rubber thickness T preferably falls within a range of from 2 mm to 3 mm.

In the pneumatic tire, the carcass layer 4 is turned up around the bead core 5 from an inner side to an outer side of the tire, a turned-up height TUH of the carcass layer 4 falls within a range of from 10% to 40% of the tire cross-sectional height SH. When the turned-up height TUH of the carcass layer 4 is reduced as described above, a vertical spring constant of the tire can be reduced, a ground contact area can be increased, and rolling resistance can be reduced. Here, when the turned-up height TUH of the carcass layer 4 is less than 10% of the tire cross-sectional height SH, rigidity around the bead portion 3 is insufficient. In contrast, when the turned-up height TUH is more than 40%, an effect of reducing a vertical spring constant is lowered. Particularly, the turned-up height TUH of the carcass layer 4 preferably falls within a range of from 20% to 30% of the tire cross-sectional height SH.

Example

In a pneumatic tire in which each of the tires had a tire size of 205/60 R16 and included: a tread portion, a pair of sidewall portions, and a pair of bead portions, in which a carcass layer was mounted between the pair of bead portions, and the tread portion had a multilayer structure including a cap tread rubber layer and an undertread rubber layer, and in which grooves and sipes are formed in the tread portion, and a snow traction index STI based on those grooves and sipes was set 186 or more, a ratio of the tread radius TR with respect to the tire outer diameter OD (TR/OD $\times$ 100%), a ratio of the ground contact width TCW with respect to the tire cross-sectional width SW (TCW/SW $\times$ 100%), a ratio of the bead filler height BFH with respect to the tire cross-sectional height SH (BFH/SH $\times$ 100%), the height Hmax at the tire maximum width position Pmax with respect to the tire cross-sectional height SH (Hmax/SH $\times$ 100%), the rubber thickness T at the tire maximum width position Pmax, and a ratio of the turned-up height TUH of the carcass layer with respect to the tire cross-sectional height SH (TUH/SH $\times$ 100%) were set as shown in Table 1, and tires in Conventional Example, Examples 1 to 10, and Comparative Examples 1 to 4 were produced.

Braking performance on ice and rolling resistance for these test tires were evaluated according to the following test methods, and the results are shown in Table 1.

Braking Performance on Ice:

Each of the test tires was assembled on a wheel with a rim size of 16 $\times$ 6.0 J, mounted on a front wheel drive vehicle having an engine displacement of 1500 cc, and inflated to an air pressure of 180 kPa. A braking distance was measured after performing ABS braking from a traveling condition at a speed of 20 km/h on a test course formed of an icy road surface under a load equivalent to two passengers. The evaluation results were expressed, using the reciprocal of the measured values, as index values with the value of the Conventional Example being defined as 100. Larger index values indicate superior braking performance on ice.

Rolling Resistance:

Each of the test tires was assembled on a wheel having a rim size of 16 × 6.0 J, and mounted on a rolling resistance tester, and pre-running was performed for 30 minutes under a condition of an air pressure of 230 kPa, a load of 4.5 kN, and a speed of 80 km/h. Then, rolling resistance was measured under the same conditions. The evaluation results were expressed, using the reciprocal of the measurement values, as index values with the value of the Conventional Example being defined as 100. Higher index values indicate lower rolling resistance.

[Table 1-3]

| | Conventional Example | Comparative Example 1 | Example 1 | Example 2 | Example 3 |
|---|---|---|---|---|---|
| TR (mm) | 550 | 500 | 600 | 1200 | 1700 |
| TCW/SW × 100% | 60 | 75 | 75 | 75 | 75 |
| BFH/SH × 100% | 30 | 15 | 15 | 15 | 15 |
| Hmax/SH × 100% | 45 | 45 | 45 | 45 | 45 |
| Rubber thickness T (mm) | 5 | 5 | 5 | 5 | 5 |
| Gc/SH × 100% | 11 | 11 | 11 | 11 | 11 |
| Gc/SH × 100% | 11 | 11 | 11 | 11 | 11 |
| TUH/SH × 100% | 50 | 50 | 50 | 50 | 50 |
| Bead core structu re | (FIG. 1) | FIG. 1 | FIG. 1 | FIG. 1 | FIG. 1 |
| Braking performance (index value) | 100 | 100 | 102 | 105 | 102 |
| Rolling resistance (index value) | 100 | 105 | 105 | 105 | 105 |

[Table 2-3]

| Examples 4 and 5 do not fall within the scope of the present invention | | | | | |
|---|---|---|---|---|---|
| | Comparative Example 2 | Comparative Example 3 | Example 4 | Example 5 | Comparative Example 4 |
| TR (mm) | 1800 | 1200 | 1200 | 1200 | 1200 |
| TCW/SW × 100% | 75 | 55 | 60 | 90 | 95 |
| BFH/SH × 100% | 15 | 15 | 15 | 15 | 15 |
| Hmax/SH × 100% | 45 | 45 | 45 | 45 | 45 |
| Rubber thickness T (mm) | 5 | 5 | 5 | 5 | 5 |
| Gc/SH × 100% | 11 | 11 | 11 | 11 | 11 |
| Gc/SH × 100% | 11 | 11 | 11 | 11 | 11 |
| TUH/SH × 100% | 50 | 50 | 50 | 50 | 50 |
| Bead core structu re | FIG. 1 | FIG. 1 | FIG. 1 | FIG. 1 | FIG. 1 |

(continued)

| Examples 4 and 5 do not fall within the scope of the present invention | | | | | |
|---|---|---|---|---|---|
| | Comparative Example 2 | Comparative Example 3 | Example 4 | Example 5 | Comparative Example 4 |
| Braking performance index value) | 100 | 100 | 102 | 102 | 100 |
| Rolling resistance index value) | 105 | 105 | 105 | 105 | 105 |

[Table 3-3]

| | Example 6 | Example 7 | Example 8 | Example 9 | Example 10 | Example 11 | Example 12 |
|---|---|---|---|---|---|---|---|
| TR (mm) | 1200 | 1200 | 1200 | 1200 | 1200 | 1200 | 1200 |
| TCW/SW × 100% | 75 | 75 | 75 | 75 | 75 | 75 | 75 |
| BFH/SH × 100% | 10 | 20 | 15 | 15 | 15 | 15 | 0 |
| Hmax/SH × 100% | 45 | 45 | 55 | 55 | 55 | 55 | 55 |
| Rubber thickness T (mm) | 5 | 5 | 5 | 3 | 3 | 3 | 3 |
| Gc/SH × 100% | 11 | 11 | 11 | 11 | 5 | 5 | 5 |
| Gc/SH × 100% | 11 | 11 | 11 | 11 | 5 | 5 | 5 |
| TUH/SH × 100% | 50 | 50 | 50 | 50 | 50 | 25 | 25 |
| Bead core structu re | FIG. 1 | FIG. 1 | FIG. 1 | FIG. 1 | FIG. 1 | FIG. 1 | FIG. 2 |
| Braking performance (index value) | 105 | 105 | 108 | 110 | 115 | 118 | 120 |
| Rolling resistance (index value) | 108 | 104 | 107 | 110 | 112 | 115 | 117 |

As understood from Table 1, the tires in Examples 1 to 10 was capable of improving braking performance on ice and reducing rolling resistance as compared to Conventional Example. In contrast, the tires in Comparative Examples 1 to 4 did not satisfy the predetermined dimension requirements, and hence a sufficient effect of improving braking performance on ice could not be obtained.

Reference Signs List

1 Tread portion
2 Sidewall portion
3 Bead portion
4 Carcass layer

5 Bead core
6 Bead filler
7 Belt layer
8 Belt cover layer
11A Cap tread rubber layer
11B Undertread rubber
12 Side rubber layer
13 Rim cushion rubber layer
14 Innerliner layer
21 Longitudinal groove
22 Lateral groove
23 Land portion
24 Sipe
CL Tire equator

## Claims

1. A pneumatic tire, comprising:

   a tread portion (1) extending in a tire circumferential direction (Tc) and having an annular shape;
   a pair of sidewall portions (2) disposed on both sides of the tread portion (1); and
   a pair of bead portions (3) disposed inward of the pair of sidewall portions (2) in a tire radial direction, wherein
   a carcass layer (4) is mounted between the pair of bead portions (3),
   the tread portion (1) has a multilayer structure including a cap tread rubber layer (11A) and an undertread rubber layer (11B),
   grooves (21, 22) and sipes (24) are formed in the tread portion (1),
   a snow traction index STI is set to 180 or more, wherein the snow traction index STI is calculated as follows:

$$STI = -6.8 + 2202 \, \rho g + 672 \, \rho s + 7.6 \, Dg$$

   wherein

   $\rho g$ is a ratio between a total length of extending components of the grooves (21, 22) in the tire lateral direction in mm and a total area of a ground contact region in mm$^2$,
   $\rho s$ is a ratio between a total length of extending components of the sipes (24) in the tire lateral direction in mm and a total area of a ground contact region in mm$^2$, and
   Dg: is the average groove depth in mm,

   a tread radius (TR) in a meridian cross-section of the tread portion (1) falls within a range of from 80% to 140% of a tire outer diameter (OD),
   a ground contact width (TCW) of the tread portion (1) falls within a range of from 70% to 75% of a tire cross-sectional width (SW), and
   a height (BFH) of a bead filler (6) disposed on an outer circumference of a bead core (5) of each of the pair of bead portions (3) is 40% or less of a tire cross-sectional height (SH).

2. The pneumatic tire according to claim 1, wherein
   a tire maximum width position (Pmax) falls within a range of from 50% to 60% of the tire cross-sectional height (SH).

3. The pneumatic tire according to claim 1 or 2, wherein
   a rubber thickness (T) at a tire maximum width position (Pmax) on an outer side of the carcass layer (4) falls within a range of from 1 mm to 4 mm.

4. The pneumatic tire according to any one of claims 1 to 3, wherein
   the carcass layer (4) is turned up around the bead core (5) from an inner side to an outer side of the pneumatic tire, and a turned-up height (TUH) of the carcass layer (4) falls within a range of from 10% to 40% of the tire cross-sectional height (SH).

**Patentansprüche**

1. Luftreifen, umfassend:

   einen Laufflächenabschnitt (1), der sich in einer Reifenumfangsrichtung erstreckt und eine Ringform aufweist;
   ein Paar Seitenwandabschnitte (2), die auf beiden Seiten des Laufflächenabschnitts (1) angeordnet sind; und
   ein Paar Wulstabschnitte (3), die von dem Paar Seitenwandabschnitte (2) in Reifenradialrichtung nach innen angeordnet sind; wobei
   eine Karkassenschicht (4) ist zwischen dem Paar Wulstabschnitte (3) angebracht ist,
   der Laufflächenabschnitt (1) eine mehrschichtige Struktur aufweist, einschließlich einer oberen Laufflächengummischicht (11A) und einer Unterlaufflächengummischicht (11B),
   Rillen (21, 22) und Lamellen (24) in dem Laufflächenabschnitt (1) ausgebildet sind, wobei ein Schneetraktionsindex STI auf 180 oder mehr eingestellt ist, wobei der Schneetraktionsindex STI wie folgt berechnet wird:

$$STI = -6{,}8 + 2202\ pg + 672\ ps + 7{,}6\ Dg$$

   wobei
   pg ein Verhältnis zwischen einer Gesamtlänge der Verlängerungskomponenten der Rillen (21, 22) in der Reifenquerrichtung in mm und einer Gesamtfläche eines Bodenkontaktbereichs in mm$^2$ ist,
   ps ein Verhältnis zwischen einer Gesamtlänge der Verlängerungskomponenten der Lamellen (24) in der Reifenquerrichtung in mm und einer Gesamtfläche eines Bodenkontaktbereichs in mm$^2$ ist und
   Dg: die durchschnittliche Rillentiefe in mm ist, wobei ein Laufflächenradius (TR) in einem Meridianquerschnitt des Laufflächenabschnitts (1) innerhalb eines Bereichs von 80 % bis 140 % eines Reifenaußendurchmessers (OD) fällt, eine Bodenkontaktbreite (TCW) des Laufflächenabschnitts (1) innerhalb eines Bereichs von 70 % bis 75 % einer Reifenquerschnittsbreite (SW) fällt, und eine Höhe (BFH) eines Wulstfüllers (6), der an einem Außenumfang eines Wulstkerns (5) jedes des Paars von Wulstabschnitten (3) angeordnet ist, 40 % oder weniger einer Reifenquerschnittshöhe (SH) beträgt.

2. Luftreifen nach Anspruch 1, wobei
   eine Reifenmaximalbreitenposition (Pmax) innerhalb eines Bereichs von 50 % bis 60 % der Reifenquerschnittshöhe (SH) fällt.

3. Luftreifen nach Anspruch 1 oder 2, wobei
   eine Kautschukdicke (T) an einer Reifenmaximalbreitenposition (Pmax) auf einer Außenseite der Karkassenschicht (4) innerhalb eines Bereichs von 1 mm bis 4 mm fällt.

4. Luftreifen nach einem der Ansprüche 1 bis 3, wobei
   die Karkassenschicht (4) um den Wulstkern (5) herum von einer Innenseite zu einer Außenseite des Luftreifens hochgeschlagen wird und eine hochgeschlagene Höhe (TUH) der Karkassenschicht (4) innerhalb eines Bereichs von 10 % bis 40 % der Reifenquerschnittshöhe (SH) fällt.

**Revendications**

1. Pneumatique, comprenant :

   une partie de bande de roulement (1) s'étendant dans une direction circonférentielle de pneu (Tc) et ayant une forme annulaire ;
   une paire de parties de flanc (2) disposées de part et d'autre de la partie de bande de roulement (1) ; et
   une paire de parties de talon (3) disposées vers l'intérieur de la paire de parties de flanc (2) dans une direction radiale de pneu, dans lequel
   une couche de carcasse (4) est montée entre la paire de parties talon (3),
   la partie de bande de roulement (1) a une structure multicouche comprenant une couche de caoutchouc de bande de roulement supérieure (11A) et une couche de caoutchouc de sous-chape (11B),
   des rainures (21, 22) et des lamelles (24) sont formées dans la partie de bande de roulement (1), un indice de traction sur neige STI est défini sur 180 ou plus, dans lequel l'indice de traction sur neige STI est calculé comme suit :

$$STI = -6,8 + 2\,202\,pg + 672\,ps + 7,6\,Dg$$

dans lequel

pg est un rapport entre une longueur totale de composants d'extension des rainures (21, 22) dans la direction latérale de pneu en mm et une aire totale d'une région de contact avec le sol en mm$^2$,

ps est un rapport entre une longueur totale de composants d'extension des lamelles (24) dans la direction latérale de pneu en mm et une aire totale d'une région de contact avec le sol en mm$^2$, et

Dg : est la profondeur moyenne de rainure en mm, un rayon de bande de roulement (TR) dans une coupe transversale méridienne de la partie de bande de roulement (1) s'inscrit dans une plage allant de 80 % à 140 % d'un diamètre extérieur (OD) de pneu, une largeur de contact avec le sol (TCW) de la partie de bande de roulement (1) s'inscrit dans une plage de 70 % à 75 % d'une largeur de coupe transversale de pneu (SW), et une hauteur (BFH) d'une charge de talon (6) disposée sur une circonférence externe d'une tringle de talon (5) de chacune parmi la paire de parties de talon (3) est de 40 % ou moins d'une hauteur de coupe transversale de pneu (SH).

2.  Pneumatique selon la revendication 1, dans lequel
    une position de largeur maximale de pneu (Pmax) s'inscrit dans une plage de 50 % à 60 % de la hauteur de coupe transversale de pneu (SH).

3.  Pneumatique selon la revendication 1 ou 2, dans lequel
    une épaisseur de caoutchouc (T) au niveau d'une position de largeur maximale de pneu (Pmax) sur un côté extérieur de la couche de carcasse (4) s'inscrit dans une plage de 1 mm à 4 mm.

4.  Pneumatique selon l'une quelconque des revendications 1 à 3, dans lequel
    la couche de carcasse (4) est tournée autour de la tringle de talon (5) d'un côté intérieur à un côté extérieur du pneumatique, et une hauteur retournée (TUH) de la couche de carcasse (4) s'inscrit dans une plage de 10 % à 40 % de la hauteur de coupe transversale de pneu (SH).

FIG. 1

FIG. 2

**EP 3 753 752 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009262646 A
- JP 2017140936 A
- JP 2014108653 A
- WO 2015059942 A1
- JP 2003165311 A